(19) **Europäisches Patentamt European Patent Office Office européen des brevets**

(11) **EP 2 065 778 B1**

(12) **EUROPEAN PATENT SPECIFICATION**

(45) Date of publication and mention of the grant of the patent:
**07.05.2014 Bulletin 2014/19**

(51) Int Cl.:
*G05D 7/01* (2006.01)          *G05D 23/02* (2006.01)
*F28F 27/02* (2006.01)          *F16K 3/02* (2006.01)

(21) Application number: **07119952.5**

(22) Date of filing: **05.11.2007**

(54) **Method for designing a flow control valve and a flow control valve**

Verfahren zum Entwerfen eines Strömungsventils und Strömungsventil

Procédé pour concevoir une vanne de commande de flux et vanne de commande de flux

(84) Designated Contracting States:
**AT BE BG CH CY CZ DE DK EE ES FI FR GB GR HU IE IS IT LI LT LU LV MC MT NL PL PT RO SE SI SK TR**

(43) Date of publication of application:
**03.06.2009 Bulletin 2009/23**

(73) Proprietor: **Sundsvall Energi AB**
**962 23 Sundsvall (SE)**

(72) Inventors:
 • **Ullberg, Sören**
  **962 23 Sundsvall (SE)**

 • **Logeke, Svante**
  **352 36 Växjö (SE)**

(74) Representative: **Hansson, Anders Max**
   **Awapatent AB**
   **P.O. Box 45086**
   **104 30 Stockholm (SE)**

(56) References cited:
   **EP-A2- 1 284 394      WO-A-01/77555**
   **DE-A1- 10 012 069      US-A- 4 796 803**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to the field of flow control valves, for example, for use in heat exchangers for generating heat and/or hot water in premises comprising at least one heat exchanger. More specifically, the invention relates to a flow control valve arrangement and a method for designing such a valve arrangement, which valve arrangement, for example, may be used in a plate heat exchanger arranged to produce domestic hot water and/or hot water for a heating system from hot water obtained from an external hot water source such as a district heating system. Furthermore, the present invention can be used for flow or mass flow measurements. In mass flow measurement applications, a compensation for the density of the fluid is required, which is a function of the temperature. Using a temperature compensation, an output signal will be directly proportional to the mass flow of the fluid. In addition, the present invention also can be used in a flow control valve with compensation for differential pressure, the flow in the valve is indifferent of variations in the differential pressure.

STATE OF THE ART

Flow control valves are well-known and are, for example, used together with heat exchangers for generating heat and/or hot water. Compact heat exchangers, such as plate heat exchangers, are often used to produce domestic hot water or hot water for a heating system. Such a heat exchanger includes a valve arrangement arranged to control the flow of the primary fluid (e.g. district heating water), for example, in dependence of the actual temperature of the tap water. A temperature sensor senses the temperature of the tap water and the valve is actuated on basis of the sensed temperature.

Such known conventional equipment for regulating, for instance, domestic hot water production in a heat exchanger carrying out temperature readings of the heated medium, bases its functionality on that there is always either a deficiency or a surplus in the parameter to be regulated and that the regulator attempts, as far as possible, to compensate the deficiency or the surplus. This procedure is generally repeated every time the equipment is exposed to a disturbance, for instance, in a flow change in the domestic hot water branch pipe. Due to the time constant in the temperature sensor and running times for the regulating motors there is always a larger or smaller deviation between the actual values and the desired values, which, furthermore, often leads to larger or smaller temperature swings.

In light of this, significant efforts have been put into the development of improved flow control valves and flow regulating valves and control process for such valves.

In SE 516 804, a flow control valve, for example, for use in heat exchangers for generating heat and/or hot water in premises comprising at least one heat exchanger is disclosed. The flow control valve is adapted to sense a fluid flow in a channel of such a heat exchanger and comprises a measurement piston arranged in the channel, an indicator and a control valve. The control valve is arranged such that the movable piston is associated with the controlled valve such that a change in the position of the measurement piston changes the opening degree of the control valve. However, this valve arrangement has a rather complex fine mechanical construction, which may be difficult to for conventional valve arrangement producer and may therefore lead to difficulties in obtaining a rational manufacturing thereof. Furthermore, it may also lead to a time-consuming and in-efficient assembly of the flow valve.

In EP 1 284 394 a control process for heat exchanging process in a heat transferring device including a primary and a secondary circuit is shown. The fluid flow in the primary circuit is controlled by using temperature of the incoming fluids of the primary and secondary circuits, and a fluid flow in the secondary circuit so that a proportionally correct flow ratio between the outgoing fluid flow of the secondary fluid circuit and the ingoing fluid flow of the primary fluid circuit can be obtained with respect to temperature requirements of the outgoing fluid. In such a control process, it would be beneficial to have a self-acting flow rate regulator that can be manufactured and assembled in an efficient way.

WO 01/77555 discloses a valve apparatus comprising a base plate having apertures spaced in a pattern, and a moving plate, having the same pattern of slots as the apertures provided in the base plate. The moving plate is in sliding engagement with the base plate and is moved in an x-direction relative to the base plate by a first thermally responsive actuator and in a y-direction by a piezo-ceramic actuator.

DE 100 12 069 discloses a device for connecting a heat exchanger for a warm water withdrawal mechanism in a domestic device to an energy network. A first valve is controlled in dependence of the flow of the warm water withdrawal and a second valve is controlled in dependence of the temperature of the water that is withdrawn. The valves are connected in parallel between the energy network and the primary side of the heat exchanger.

Thus, it is desirable to have a self-acting domestic hot water flow rate regulator in a device as stated above that allows for a continuous proportionally correct flow ratio between the domestic hot water, which is to be heated, and the hot water which is supplied to the heat exchanging process as heating medium, based on detected domestic hot water requirements. Such a regulator or control valve shall even cope with the extremely difficult regulating cases caused when consumers draw off relatively small amounts of hot water, where one normally does not have a circulation circuit for domestic hot water. The regulator shall also be suitable for use in the characteristic and acknowledged difficult to handle "on-off" regulating, which is typical for premises, and small houses.

BRIEF DESCRIPTION OF THE INVENTION

In general, the present invention relates to a valve arrangement and a method for dynamic adjustment of the characteristics of a valve or flow transducer to a desired characteristic of an object or a process which the equipment, i.e. valve or transducer, is interacting with. The valve and the transducer can be designed to interact with each other in the control of a device, e.g. a heat exchanger in a heat exchanging process, or can be designed to act independently of each other.

More specifically, the invention relates to a technique and a calculation method to obtain a dynamic adjustment, with respect to one or more inherent and/or exterior parameters including temperature and/or pressure, of the hydraulic characteristic, i.e. the opening area, in relation to the valve range and/or flow transducer range or a interrelated combination of flow transducer and valve.

A specific object of the present invention is to obviate or overcome at least some of the above-mentioned problems of the known technique by providing an improved flow control valve arrangement and method for use in, for example, a heat exchanger arranged to control the flow of the primary fluid, e.g. district heating water.

According to an aspect of the present invention, there is provided a method for designing characteristics of a flow control valve arrangement to adapt it to characteristics of a process which the valve arrangement is interacting with. The method comprises the steps of: designing a first hole pattern in at least one first element and a second hole pattern in at least one second element of the valve arrangement, wherein geometries of the hole patterns are designed such that a desired valve characteristics is achieved; and arranging the first and the second element such that the hole patterns may overlap each other so as to form at least one throughput area of the valve arrangement, wherein the first and second element are arranged such that the throughput area can be varied by relative displacements of the elements in at least two substantially orthogonal directions in dependence of at least two parameters of the process.

According to another aspect of the present invention, there is provided a flow control valve arrangement for controlling a fluid, wherein characteristics of a flow control valve is adapted to characteristics of a process which the valve is interacting with. The valve arrangement comprises: at least one first element including a first hole pattern; at least one second element including a second hole pattern, wherein geometries of the hole patterns are designed such that a desired valve characteristics is achieved; wherein the first and the second element are arranged such that the hole patterns may overlap each other thereby forming a throughput area of the valve arrangement; and wherein the first and second element are arranged such that the throughput area can be varied by relative displacements of the elements in two substantially orthogonal directions in dependence of at least two parameters of the process.

According to embodiments, one or several plates being movable with respect to a base plate or one or several cylinders being movable with respect to a base cylinder, or in a corresponding arrangement, are each provided with overlapping hole patterns that under influence from process parameters, such as temperature or pressure, dynamically can be varied, within a range so as to obtain a completely closed flow area for a medium as well as a completely open flow area, by different combinations of relative displacements of the hole patterns, i.e. the plates or cylinders, in relation to each other in substantially orthogonal directions.

According to a first important and basic principle of the present invention, the throughput area of the valve, by means of overlapping hole patterns, can be varied, in an opening direction seen, to be either broader and thereby shorter or narrower and thereby longer. A second important principle of the present invention, is that large changes of the throughput area can be achieved by means of small or limited displacements between the elements provided with the overlapping hole patterns in a direction crosswise (e.g. orthogonally) to the opening direction.

According to another aspect of the present invention, the flow control valve arrangement is used in a district heating central or system including at least one heat exchanger. The central is adapted to heat tap water to a constant temperature. This is performed by circulating district heating water in a primary side of the heat exchanger adapted to heat the tap water circulating in the secondary side. The flow valve arrangement is arranged such that water from the district heating circuit flows in one part of the valve arrangement and water from the tap water circuit in another part. The flow control valve arrangement regulates or controls the primary flow as a function of, inter alia, the secondary flow, the temperature of the tap water entering the heat exchanger and the temperature of the incoming district heating water. The valve arrangement is adapted for controlling a primary fluid of a primary fluid circuit of a heat exchanger, the heat exchanger being adapted to transfer heat from the primary fluid circuit to at least one secondary fluid circuit, wherein the valve arrangement is adapted to control a flow of an incoming primary fluid on basis of a flow of an incoming secondary fluid in the secondary fluid circuit, wherein the geometries of throughput areas of the valve arrangement for the primary and secondary fluid, respectively, are adapted to the thermal characteristics of the heat exchanger.

The method for designing a valve and the valve arrangement according to the present invention thus provides a great flexibility to obtain different relations between flow and valve position, i.e. relative position between valve plates or valve cylinders, and other parameters such as temperature. The valve position can be used to control another valve, as explained above. Moreover, the volume flow of a fluid in a circuit can be measured. In this case, the valve position provides a measure being proportional to the volume flow. In addition, the mass flow can also be measured. In this case, a compensation for the density of the fluid is required, which is a function of the temperature. Using a temperature compensation, one direction can be regulated and the other direction, orthogonal to the first direction, can be made directly proportional to the mass flow of the fluid which can be detected by using conversion means. Moreover, principles of the present invention can be used to design a valve with compensation for variations of differential pressure.

## BRIEF DESCRIPTION OF THE DRAWINGS

In the following detailed description, reference will be made to the accompanying drawings, of which:

Fig. 1 is a schematic diagram showing the main components of a valve arrangement functioning as a flow sensor according to an embodiment of the present invention;

Fig. 2 is a schematic diagram showing the hole patterns of the plates of an exemplifying embodiment of a valve according to the present invention;

Fig. 3a is a diagram showing the opening area of the embodiment shown in Fig. 2 as a function of the displacement of the plate in the X-direction using a first set of design parameters;

Fig. 3b is a diagram showing the displacement of the plate in the X-direction as a function of the flow through the valve using the first set of parameters;

Fig. 4a is a diagram showing the opening area of the embodiment shown in Fig. 2 as a function of the displacement of the plate in the X-direction using a second set of design parameters;

Fig. 4b is a diagram showing the displacement of the plate in the X-direction as a function of the flow through the valve using the second set of parameters;

Fig. 5a is a diagram showing the opening area of the embodiment shown in Fig. 2 as a function of the displacement of the plate in the X-direction using a third set of design parameters;

Fig. 5b is a diagram showing the displacement of the plate in the X-direction as a function of the flow through the valve using the third set of parameters;

Fig. 6 is a schematic diagram showing the hole patterns of the plates of another exemplifying embodiment of a valve according to the present invention;

Fig. 7 is a diagram showing the opening area of the embodiment shown in Fig. 6 as a function of the displacement of the plate in the Y-direction using a first set of design parameters;

Fig. 8 is an example of a schematic diagram illustrating a system environment including a heat exchanger package with two circuits in which the valve arrangement according to the present invention may be implemented; and

Fig. 9 a schematic diagram showing the hole patterns of the plates of a further exemplifying embodiment of a valve according to the present invention.

## DETAILED DESCRIPTION OF THE INVENTION

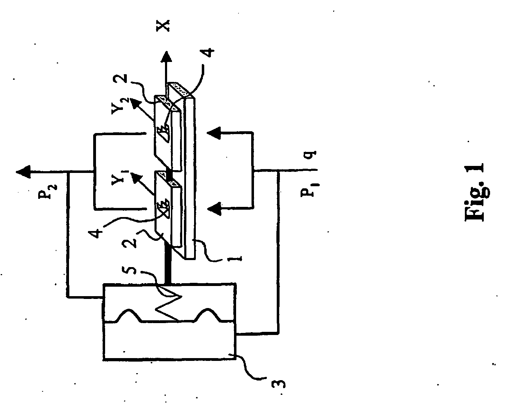

The descriptions of embodiments of a flow control valve arrangement according to the present invention are mainly directed at flow control valves that may, for example, be used for central heating and heating of domistic hot water in buildings. However, the device and use of it is not limited to this and a number of suitable applications will appear to be just as interesting and obvious to a man skilled in the art, based on the description in its entirety and on the following description of embodiments in particular. According to the invention, the valve is designed to disclose a valve state, X, being a function of the flow, q, of the medium flowing through the valve, see Fig. 1 in which an embodiment of the invention is shown schematically. As the skilled man in the art realizes, there are other parameters that may influence the relation between the flow and the valve state or the deflection or response of the valve as will be described below.

The valve state, which is the output signal from the valve, may, for example, be used to:

i) **Control another valve**: One example, is a heat exchanger. The secondary flow in the heat exchanger flows through the valve (in this case functioning as a flow sensor), which provides a valve state, X, or axial deplacement, which is used to control another valve that regulates the flow on the primary side of the heat exchanger. The valve may in this case be adapted to the characteristics of the heat exchanger. It is also possible to compensate for different temperatures of the fluid in the primary and the secondary circuit at the same time. This can be achieved by e.g. connecting two thermo adjusting elements to a respective movable valve plate.

ii) **Control valve for a process:** The process may be a heat exchange process, se i) above. In this case the primary fluid flows through the valve. The pressures $P_1$ and $P_2$ are in this case created outside the valve, for example, in an external flow sensor for the secondary fluid. (According to an alternative way to control the valve, the pressures $P_1$ and $P_2$ can be created outside the valve, for example, in an external flow transducer in which another fluid is flowing.)

iii) **Measuring the volume flow of a fluid of a circuit**: In this case, no regulation of the Y-state is required, the X-state is proportional to the volume flow.

iv) **Measuring the mass flow**: In this case, a compensation for the density of the fluid which is a function of the temperature is required. With a temperature compensation, it is possible to regulate the Y-state, and thereby the X-state will be directly proportional to the mass flow of the fluid.

As can be seen in Fig. 1, the main components of this embodiment are valve plates 1, 2 and a membrane 3. The valve plates includes one stationary plate 1 and one or more movable plates 2. All plates are provided with hole patterns 4. By displacing or moving the movable plates with respect to the stationary plate 1, the hole patterns 4 cause the overall opening area of the valve to vary in dependence of the position of the one or more movable plates 2. One way of controlling the valve is to connect one side of the membrane 3 to the input of the valve and the other to the output. A spring 5 is acting on the membrane 3 to balance the output of the membrane due to the pressure difference. The movement of the membrane is translated to the movable plates 2 such that it influences the movement in the X-direction.

The difference in pressure in front of the valve and after or behind the valve gives rise to a force from the membrane. $P_1$ and $P_2$ are functions of the flow through the valve. They are however equal to each other when the flow, q, is zero. That means that the spring will act on the membrane such that the movable plates 2 is moved to a closed position. A flow through the valve will cause a pressure difference, which, in turn, gives rise to a force from the membrane. This force is balanced by the spring and equilibrium is obtained at a certain deformation, X. Thus, a valve state or position, X, as a function of the flow is achieved:

$$X = f(q) \qquad (1)$$

The characteristics of this relation can be controlled by adjusting the design of the hole patterns of the plates.

It is also possible to introduce other parameters to change the relation according to (1). For example, this can be achieved by changing the position in the Y-direction of one or more of the movable plates 2. The Y-position may for example be controlled by:

i) Temperature: By using a thermo adjusting element it is possible to control the characteristics (1) by means of the temperature of the incoming medium of the secondary circuit, or the temperature in another circuit for example, the incoming medium of the primary side of the heat exchanger.

The general principles of the invention will now be explained. There are in principle two forces acting against each other in the valve. The first force is caused by the spring.

$$F_f = c \times (L_1 + X) \qquad (2)$$

Where c is the spring constant and $L_1$ is the pre-load of the spring. The other force arises from the membrane.

$$F_m = \Delta P \times A_m \qquad (3)$$

Where $\Delta P = P_1 - P_2$ and $A_m$ is the effective area of the membrane.

For a flow through a throttling the following relation applies:

$$\dot{q} = C_q \times A_v \times \sqrt{\frac{2}{\rho} \times \Delta P} \qquad (4)$$

Where q is the flow of the medium, $A_v$ is the opening area of the valve, $\rho$ is the density of the medium and $C_q$ is the flow coefficient.

The following relation applies for the force equilibrium:

$$F_j = F_m \qquad (5)$$

By using (2)-(4) in (5), the following expression for the flow can be obtained:

$$q = C_q \times A_v \times \sqrt{\frac{2}{\rho} \frac{c \times (L_1 + X)}{A_m}} \qquad (6)$$

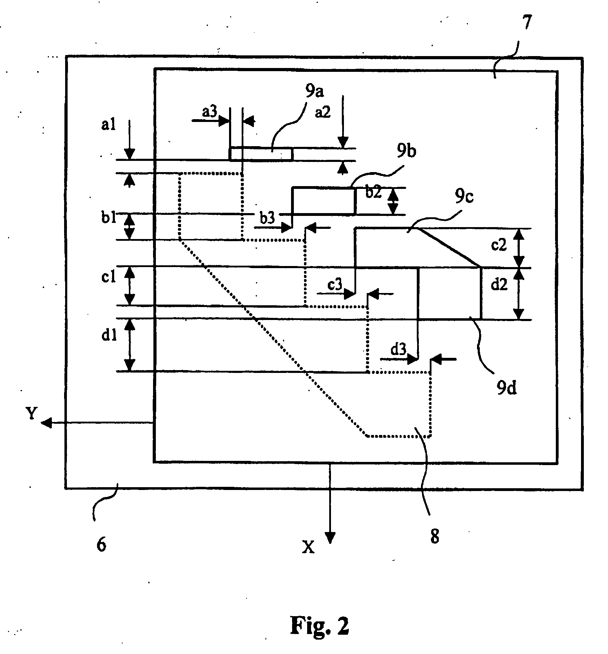

The design of the opening area or throughput area of the valve in accordance with a first embodiment will now be described with reference to Fig. 2. A first base plate 6 is provided with a hole pattern, in this embodiment one irregularly shaped aperture or hole 8. A second plate 7 is provided with a hole pattern, in this embodiment four irregularly shaped apertures or holes 9a-9d. As discussed above, the design of the opening area or throughput area of the valve is vital for the characteristics of the valve. According to this design, each opening can be dimensioned such that it is opened for the flow during the whole or a part of the valve range, X. In this example, the effective openings have the same geometry in the fixed base plate. This is however not necessary.

In this example, four opening or holes are used but it is, of course, conceivable to use a higher number of or a smaller number of openings or holes. If higher number of holes are used, it is, among other things, possible to obtain a larger opening area with a limited valve range or a stronger non-linearity in the valve characteristics.

As can be seen in Fig. 2, the edges of the holes are parallel with the direction of motion or movement in the X-direction and Y-direction. As understood by the person skilled within the art, this is not necessary even if it facilitates the calculation of the valve characteristics.

The area of the different openings are in accordance with the following:

$$A_a = 0 \qquad X \leq a1$$

$$A_a = (X - a1) \times (Y + a3) \qquad a1 < X < a3$$

$$A_a = a3 \qquad X \geq a3$$

$$A_b = 0 \qquad\qquad X \le b1$$

$$A_b = (X - b1) \times (Y + b3) \qquad b1 < X < b3$$

$$A_b = b3 \qquad\qquad X \ge b3$$

$$A_c = 0 \qquad\qquad X \le c1$$

$$A_c = (X - c1) \times (Y + c3) \qquad c1 < X < c3$$

$$A_c = c3 \qquad\qquad X \ge c3$$

$$A_d = 0 \qquad\qquad X \le d1$$

$$A_d = (X - d1) \times (Y + d3) \qquad d1 < X < d3$$

$$A_d = d3 \qquad\qquad X \ge d3$$

The overall opening area of the valve is hence the following:

$$A_v = A_a + A_b + A_c + A_d$$

Thus, it is possible to adjust the characteristics of the valve by selecting different values for a1, a2, a3, b1...d3. In this example, it is only the characteristics of the valve in the X-direction that is described. Therefore, the parameters that influence the opening area in the Y-direction fixed with the following values:

$$Y = 0mm$$

$$a3 = b3 = c3 = d3 = 3mm$$

If all four opening have the same design, a linear characteristics is achieved, see table 1 below in which an example is shown.

Table 1

| a1 | a2 | b1 | b2 | c1 | c2 | d1 | d2 |
|----|----|----|----|----|----|----|----|
| mm |    | mm |    | mm |    | mm |    |
| 1  | 5  | 1  | 5  | 1  | 5  | 1  | 5  |

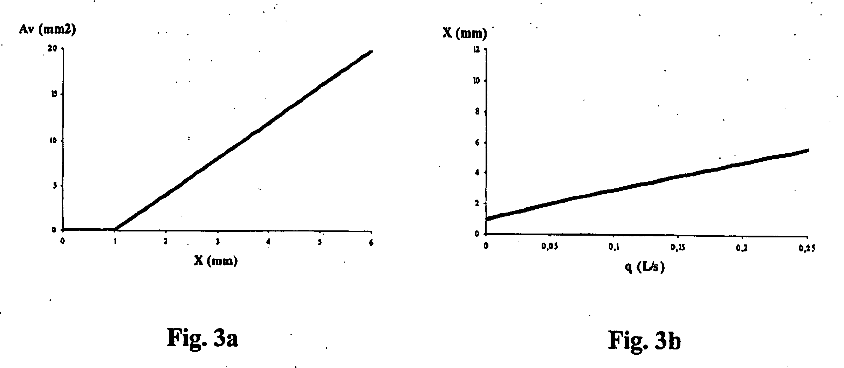

By using these parameter values a linear relationship between the opening area, $A_v$, as a function of the valve state, X, is obtained, see Fig. 3a.
The valve state, X, can now be determined using equation (5). For a given flow, q, the valve state, X, can be calculated. Using the selected parameter values a1, a2, a3, ...d2, a linear function of the valve state as a function of the flow, q, is achieved, see Fig. 3b.

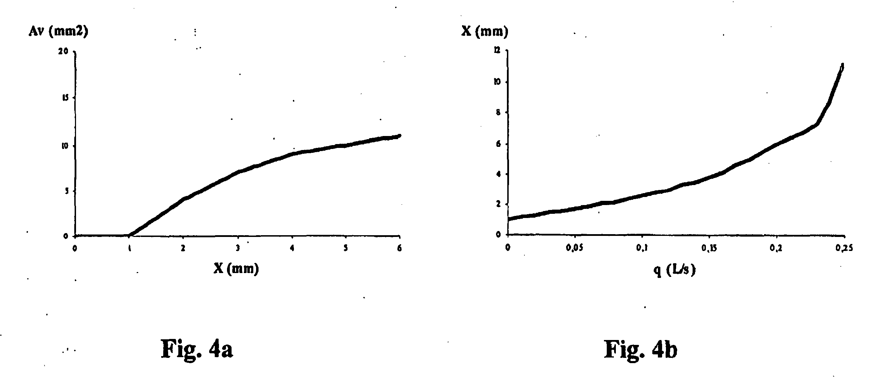

If the four openings instead is designed such the opening area, $A_v$, as a function of the valve state, X, is decreasing, a progressive characteristic can be achieved, see Figs. 4a and 4b. In this case, the parameters may be given the values according to table 2 shown below.

Table 2

| a1 | a2 | b1 | b2 | c1 | c2 | d1 | d2 |
|----|----|----|----|----|----|----|----|
| mm |    | mm |    | mm |    | mm |    |
| 1 | 6,5 | 1 | 3 | 1 | 2 | 1 | 1 |

The decreasing opening area, $A_v$, thus entails that the valve will open itself more at a higher flow, q, see Fig. 4b.

According to another example, the openings may be designed such that the opening area, $A_v$, as a function of the valve state increases, see Figs. 4a and 4b. In this case, the parameters may be given the values according to table 3 shown below.

Table 3

| a1 | a2 | b1 | b2 | c1 | c2 | d1 | d2 |
|----|----|----|----|----|----|----|----|
| mm |    | mm |    | mm |    | mm |    |
| 1 | 5 | 2 | 4 | 3 | 3 | 4 | 2 |

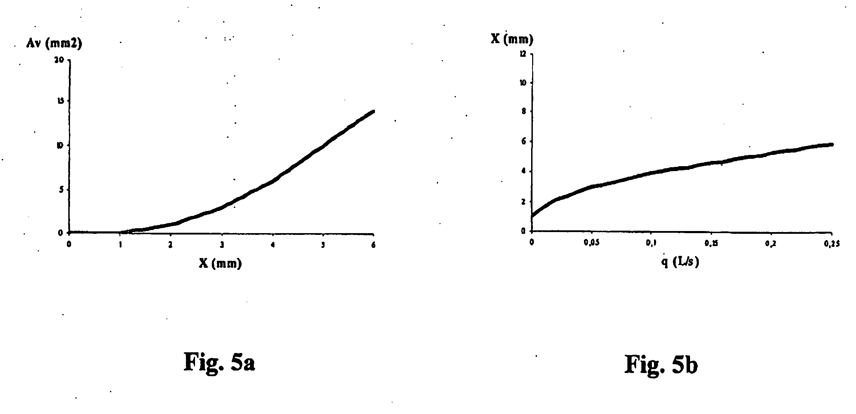

The increasing opening area, $A_v$, entails that the valve will open itself less at an increasing flow, q, as can be seen in Fig. 5b, and a regresive characteristis is thus achieved.

Turning now to a discussion of the use of the principles of the present invention in a valve function. The technique can be used in a valve influenced by an adjustment device, for example, a thermo adjusting device. The flow may in such a case be proportional to the displacement in the X direction. The valve is independent of the differential pressure by means of a compensation to the differential pressure in the Y direction. This valve can be used with a flow sensor described earlier.

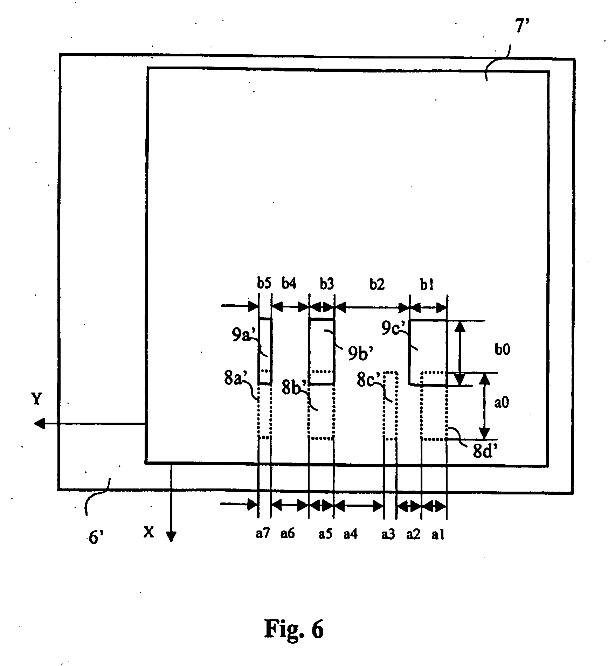

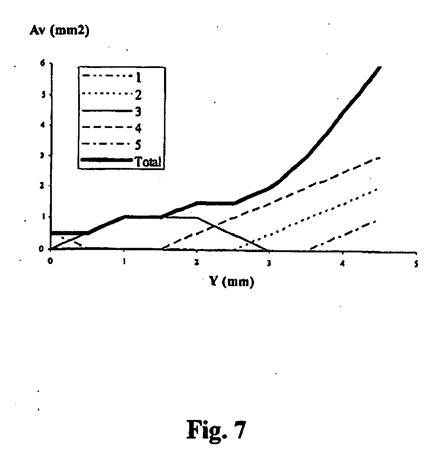

With reference now to Fig. 6 and 7, a second alternative hole pattern design will be discussed. In this case, a hole or an aperture of the hole pattern is able to open as well as close in contrast to the alternative above and, in Fig. 6, an exemplifying hole pattern is shown. A first base plate 6' is provided with a hole pattern, in this example the hole pattern includes four square shaped apertures or holes 8a'-8d'. A second plate 7' is provided with a hole pattern, which in this example includes three square shaped apertures or holes 9a'-9c'. In this example, the valve is not connected to a membrane, i.e. the pressure drop over the valve does not affect the opening area. Thereby, the opening area of the valve can easily be determined by conventional methods using the following general relation:

$$A_v = f(Y, a_{1..7}, b_{1..5}) \times f(X, a_0, b_0) \qquad (6)$$

To make this example more clear, an examplifying hole pattern is given below.

$$a_0 = 4,6mm \qquad b_0 = 4,6mm$$
$$a_1 = 3mm \qquad b_1 = 1,5mm$$
$$a_2 = 4mm \qquad b_2 = 4,5mm$$
$$a_3 = 3mm \qquad b_3 = 3mm$$
$$a_4 = 1,5mm \qquad b_4 = 4mm$$
$$a_5 = 1mm \qquad b_5 = 2mm$$
$$a_6 = 2,5mm$$
$$a_7 = 2mm$$

If X = 4.6 mm and Y increases from 0 mm to 4.5 mm, the opening area will be as illustrated in Fig. 7. The lines 1 - 5 represent the individual openings or holes that is obtained when Y increases from 0 mm to 4,5 mm. The total line represents the total opening area, i.e. the aggregated area of the individual hole areas.

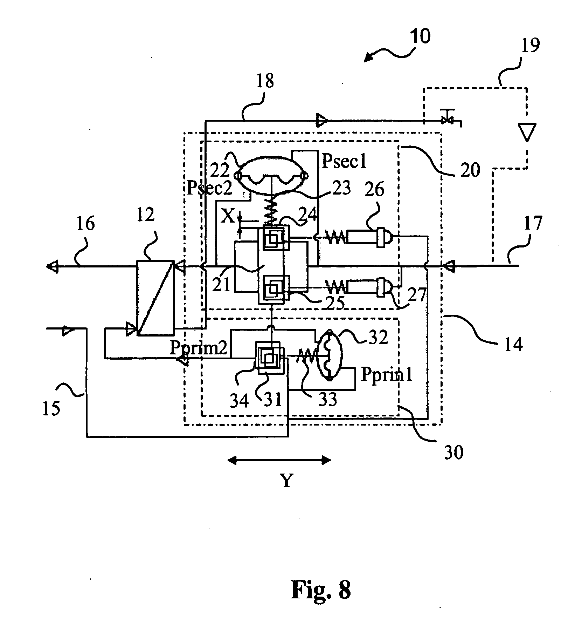

Turning now to Fig. 8, the flow control valve arrangement in accordance with the present invention implemented in a heating central system will be described in more detail. It should however be noted, as the skilled man realizes, that valve arrangement according to the present invention and the method for designing such an arrangement may be implemented in other applications where a flow or flows of a medium is/are controlled such as, for example, in cooling circuits.

The purpose of the system shown in Fig. 8 is to heat tap warm water to a constant temperature. This is obtained by circulating district heating water at a primary side of a heat exchanger heating the tap warm water circulating at the secondary side. The system 10 comprises a heat exchanger 12 and a valve arrangement 14. A primary fluid is supplied via a ingoing primary pipe 15 to the heat exchanger 12 and back to the district heating system via an outgoing pipe 16. On the secondary side, tap water is supplied to the heat exchanger 12 via a first pipe 17 and, after being heated in the heat exchanger, back into the tap water circuit via a second pipe 18. The pipe 18 is connected to the pipe 17 to re-circulate heated water via a pipe 19.

According to this embodiment of the present invention, the valve arrangement 14 is adapted to control the ingoing primary flow $q_f$ flowing into the heat exchanger 12 via the pipe 15 as a function of the secondary flow $q_v$ flowing into the tap water circuit via the pipe 18.

The valve arrangement 14 comprises a first valve device 20 including a base plate 21, which in this embodiment is stationary, provided with a hole pattern, which may be designed in accordance with the principles described above. Furthermore, the first valve device includes a second plate 24 provided with a hole pattern, which may be designed in accordance with the principles described above, and a third plate 25 provided with a hole pattern, which may be designed in accordance with the principles described above. The second and third plates 24 and 25, respectively, are connected to a pressure compensating means 22, which in this embodiment is a membrane, balanced via a spring 23. The membrane 22 is, at one side, connected to the input of the valve and at the other to the output. The spring 23 is acting on the membrane 22 to balance the output of the membrane due to the pressure difference. Movements of the membrane are translated to the second and third plates 24 and 25, respectively, such that they influence the movement of the plates in the X-direction, indicated by X in Fig. 8. The difference in pressure in front of the valve, indicated with Psec1, and after or behind the valve, indicated with Psec2, (i.e. the pressure drop over the valve) gives rise to a force from the membrane. Psec1 and Psec2 are functions of the flow through the valve. They are however equal to each other when the flow in the pipe 17 is zero. A flow through the valve will give rise to a pressure difference, which, in turn, causes a force from the membrane 22. Thus, the positions in the X-direction of the second and third plates 24 and 25 are influenced by the pressure drop over the valve device 20, or in fact the plates 21, 24, and 25. In this embodiment, a certain change of the pressure drop results in an equal movement in the X-direction of the second plate 24 and the third plate 25.

Moreover, the second plate 24 is connected to a first temperature compensating means 26 such that a change of the temperature of the primary fluid of the pipe 15 gives rise a movement of the plate 24 in the Y-direction, indicated by the arrow Y in Fig. 8. The third plate 25 is connected to a second temperature compensating means 27 such that a change of the temperature of the secondary fluid of the pipe 17 gives rise a movement of the plate 27 in the Y-direction.

In addition, the valve arrangement 14 comprises a second valve device 30 including a base plate 31, which in this embodiment is stationary, provided with a hole pattern, which may be designed in accordance with the principles described above. The second valve device 30 also comprises a second plate 34 provided with a hole pattern, which may be designed in accordance with the principles described above, and connected to a pressure compensating means 32 balanced via a spring 33. The second valve device 30 is interconnected to the first valve device 20 such that a movement in the X-direction of the second and third plate 24 and 25 of the first valve device results in an equal movement of the second plate 34 of the second valve device 30. The membrane 32 is, at one side, connected to the input of the valve and at the other to the output. The spring 33 is acting on the membrane 32 to balance the output of the membrane due to the pressure difference. Movements of the membrane 32 are translated to the second plate 34 such that they influence the movement in the Y-direction. The difference in pressure in front of the valve, indicated with Pprim1 and after or behind the valve, indicated with Pprim2, gives rise to a force from the membrane. Primary, Pprim1 and Pprim2 are functions of the differential pressure between the incoming primary fluid in the pipe 15 and the outgoing primary fluid in the pipe 16. Secondary, Pprim1 and Pprim2 are functions of the flow through the valve. A flow through the valve will give rise to a pressure difference, which, in turn, causes a force from the membrane 32.

The hole patterns of the base plate 21 on one side and the second plate 24 and third plate 25 on the other, respectively, overlap each other and thus form the opening areas of the first valve device 20. The opening area (or throughput area) formed by the hole pattern of the base plate 21 and the hole pattern of the second plate 24 is varied in dependence of the secundary flow and thereby the pressure difference between Psec1 and Psec2, i.e. the movement of the plates 24 and 25 in the X-direction, and the temperature of the ingoing primary fluid, i.e. the movement of the plate 24 in the Y-direction. The opening area formed by hole pattern of the base plate 21 and the hole pattern of the third plate 25 is varied in dependence of the secundary flow and thereby the pressure difference between Psec1 and Psec2, i.e. the movement of the plates 24 and 25 in the X-direction, and the temperature of the tap water entering the heat exchanger 12, i.e. the movement of the plate 25 in the Y-direction. A higher temperature of the primary fluid entails a larger opening area, and a higher temperature of the secondary fluid entails also a larger opening area each alone or/and both together giving the effect of a lower pressure difference between Psec1 and Psec2 and thereby a shorter movement in the X-direction at a certain secondary flow. The hole patterns of the base plate 31 and the second plate 34 overlaps each other and thus forms the opening area of the second valve means 30. The opening area is varied in dependence of the secundary flow and thereby of the pressure difference between Psec1 and Psec2, i.e. the movement of the plate 34 in the X-direction, and the pressure difference between Pprim1 and Pprim2, i.e. the movement of the second plate 34 in the Y-direction. A lower pressure difference of the primary side entails a larger opening area and a higher pressure of the primary side entails a smaller opening area. By this compensation for the differential pressure in the valve arrangement 30 the throughput or flow of primary fluid in the valve for a give X-position can be held constant independently of variations in the differential pressure of the primary circuit.

In other words, the opening areas of the valve depend on the flow of tap water, the temperature of the tap water and the temperature of the district heating water while being adjusted to the thermal characteristics (i.e. flow requirement) of the heat exchanger in each operational mode.

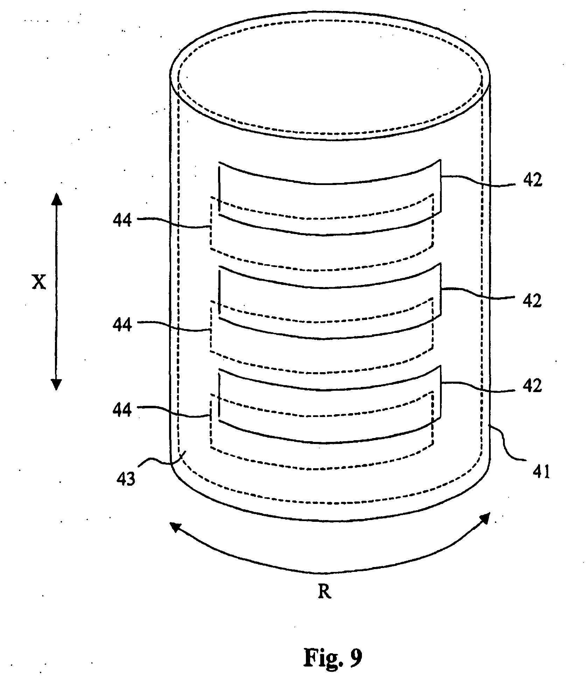

With reference now to Fig. 9, yet another embodiment of the present invention will be discussed. A first outer cylinder 41 is provided with a hole pattern, in this embodiment three rectangular apertures or holes 42. A second inner cylinder 43 is provided with a hole pattern, in this embodiment three rectangular apertures or holes 44. As discussed above, the design of the opening area or throughput area of the valve is vital for the characteristics of the valve. In this example, three opening or holes are used but it is, of course, conceivable to use more or less openings or holes. If larger number of holes are used, it is, among other things, possible to obtain a larger opening area with a limited valve range or a stronger non-linearity in the valve characteristics.

The valve may be arranged such that the inner cylinder 43 is fixed and such that the outer cylinder 41 is connected to a pressure compensating means, for example, the spring and membrane construction discussed above, and to a temperature compensating means, which may be arranged to detect a temperature of an ingoing fluid at a secondary side of a heat exchanger, for example, the heat exchanger shown in Fig. 8. The outer cylinder 41 may in this case be arranged such that a change in the pressure drop over the cylinder results in a movement of the outer cylinder in the X-direction and a change in the detected temperature results in a rotational movement in the R-direction. According to this design, each opening can be dimensioned such that it is opened for the flow during the whole or a part of the valve range, X. In this example, the effective openings have the same geometry in both cylinders. This is however not necessary. As can be seen in Fig. 9, the edges of the holes are parallel with the direction of motion or movement in the X-direction and R-direction. As understood by the person skilled within the art, this is not necessary even if it facilitates the calculation of the valve characteristics. The geometry of the hole patterns may advantageously be determined using the principles discussed above with respect to Figs. 1-8.

According to a further embodiment of the present invention, a first outer half cylinder is provided with a hole pattern, in this embodiment three rectangular apertures or holes. A second inner half cylinder is provided with a hole pattern, in this embodiment three rectangular apertures or holes. As discussed above, the design of the opening area or throughput area of the valve is vital for the characteristics of the valve. In this example, three opening or holes are used but it is, of course, conceivable to use more or less openings or holes. If larger number of holes are used, it is, among other things, possible to obtain a larger opening area with a limited valve range or a stronger non-linearity in the valve characteristics.

The valve may be arranged such that the inner half cylinder is fixed and such that the outer half cylinder is connected to a pressure compensating means, for example, the spring and membrane construction discussed above, and to a temperature compensating means, which may be arranged to detect a temperature of an ingoing fluid at a secondary side of a heat exchanger, for example, the heat exchanger shown in Fig. 8. The outer half cylinder may in this case be arranged such that a change in the pressure drop over the cylinder results in a movement of the outer cylinder in the X-direction and a change in the detected temperature results in a rotational movement in the R-direction. According to this design, each opening can be dimensioned such that it is opened for the flow during the whole or a part of the valve range, X. In this example, the effective openings have the same geometry in both half cylinders. This is however not necessary. The geometry of the hole patterns may advantageously be determined using the principles discussed above with respect to Figs. 1-8.

**Claims**

1. A method for designing operating characteristics of a flow control valve arrangement to adapt it to operating characteristics of a process which the valve arrangement is interacting with comprising the steps of
designing a first hole pattern in at least one first element (6) and a second hole pattern in at least one second element (7) of said valve arrangement, wherein geometries of said hole patterns are designed such that a desired valve operating characteristic is achieved; and

arranging said first and said second element such that the hole patterns may overlap each other so as to form at least one throughput area of said valve arrangement, wherein said first and second element are arranged such that said throughput area can be controlled by relative displacements of said elements in at least two substantially orthogonal directions in dependence of at least two parameters of said process, said parameters influencing the relation between the flow and a valve state;

**characterised by** further comprising the steps of

adapting said valve arrangement for controlling an ingoing primary fluid flow flowing into a heat exchanger (12), such that said ingoing primary fluid flow is controlled as a function of a secondary fluid flow in a secondary fluid circuit of said heat exchanger, wherein the geometries of throughput areas of said valve arrangement for said primary and secondary fluid, respectively, are adapted to the thermal characteristics of said heat exchanger;

adapting said valve arrangement for controlling said flow of the incoming primary fluid in said primary circuit using a first valve means (30);

adapting said valve arrangement for controlling said flow of the secondary fluid in said secondary fluid circuit using a second valve means (20);

adapting said valve arrangement for compensating for a first temperature in order to adjust at least one throughput area of said second valve means on basis of a temperature of said incoming primary fluid; and

adapting said valve arrangement for compensating for a second temperature in order to adjust at least one throughput area of said second valve means on basis of a temperature of said incoming secondary fluid.

2. The method according to claim 1, wherein the step of designing comprises the step of
selecting geometry parameters such that the relative displacements of said elements in said at least two substantially orthogonal directions in dependence of at least two parameters of said process results in changes of the at least one throughput area that reflects the desired valve operating characteristics.

3. A flow control valve arrangement for controlling a fluid, wherein operating characteristics of a flow control valve are adapted to operating characteristics of a process the valve is interacting with, said valve arrangement comprising:

at least one first element (6) including a first hole pattern;

at least one second element (7) including a second hole pattern, wherein geometries of said hole patterns are designed such that a desired valve operating characteristic is achieved; wherein said first and said second element are arranged such that the hole patterns may overlap each other thereby forming a throughput area of said valve arrangement; and

wherein said first and second element are arranged such that said throughput area can be controlled by relative displacements of said elements in two substantially orthogonal directions in dependence of at least two parameters of said process, said parameters influencing the relation between the flow and a valve state;

**characterised in that** said valve arrangement is adapted for controlling an ingoing primary fluid flow flowing into a heat exchanger (12), such that said ingoing primary fluid flow is controlled as a function of a secondary fluid flow in a secondary fluid circuit of said heat exchanger, wherein the geometries of throughput areas of said valve arrangement for said primary and secondary fluid, respectively, are adapted to the thermal characteristics of said heat exchanger,

said valve arrangement further comprising:

a first valve means (30) adapted to control said flow of the incoming primary fluid in said primary circuit;

a second valve means (20) adapted to control said flow of the secondary fluid in said secondary fluid circuit;

a first temperature compensating means (26) connected to said second valve means adapted to influence at least one throughput area of said second valve means on basis of a temperature of said incoming primary fluid; and

a second temperature compensating means (27) connected to said second valve means adapted to adjust at least one throughput area of said second valve means on basis of a temperature of said incoming secondary fluid.

4. The flow control valve arrangement according to claim 3, wherein the geometry parameters are selected such that the relative displacements of said elements in said at least two substantially orthogonal directions in dependence of at least two parameters of said process results in changes of the at least one throughput area that reflects the desired valve operating characteristics.

5. The flow control valve arrangement according to claim 3 or 4, wherein said first valve means is interconnected to said second valve means such that the flow of the incoming primary fluid can be controlled on basis of a flow of an incoming secondary fluid in said secondary fluid circuit.

6. The flow control valve arrangement according to any one of claims 3-5, further comprising:

a first pressure compensating means (32) connected to said first valve means adapted to adjust at least one throughput area of said first valve means on basis of a differential pressure of said primary circuit; and
a second pressure compensating means (22) connected to said second valve means adapted to adjust at least one throughput areas of said second valve means on basis of a differential pressure of said secondary circuit.

7. The flow control valve arrangement according to claim 6, wherein the differential pressure of said primary circuit is the differential pressure over said first valve means and the differential pressure of said secondary circuit is the differential pressure over of said second valve means.

8. The flow control valve arrangement according to claim 6 or 7, wherein said first pressure compensating means is a first membrane adapted to act on said first valve means via a spring element (33) as a response to a change in the differential pressure over said first valve means such that the throughput area is adjusted.

9. The flow control valve arrangement according to claim 6, 7 or 8, wherein said second pressure compensating means is a second membrane adapted to act on said second valve means via a spring element (23) as a response to a change in the differential pressure over said second valve means such that the throughput areas are adjusted.

10. The flow control valve arrangement according to anyone of preceding claims 3-9, wherein said first valve means comprises
a first valve plate (31) including at least one aperture; and
at least one second plate (34), said second plate being movable in a first direction being perpendicular to a second direction and said second direction with respect to said first plate, including at least one aperture, wherein said apertures co-operate to form said throughput area of said first valve means.

11. The flow control valve arrangement according to anyone of preceding claims 3-10, wherein said second valve comprises
a first valve plate (21), said first plate including at least a first aperture set having at least one aperture and a second aperture set having at least one aperture; and
at least one second plate (24), said second plate being movable in a first direction being perpendicular to a second direction and said second direction with respect to said stationary plate, including at least a first aperture set having at least one aperture, wherein said first aperture sets of the first plate and the second plate co-operate to form said first throughput area of said second valve means, and at least a second aperture set having at least one aperture, wherein said second aperture sets of the first plate and the second plate co-operate to form said second throughput area of said second valve means.

12. The flow control valve arrangement according to anyone of preceding claims 3-9, wherein said second valve comprises
a first valve plate (21), said first plate including at least a first aperture set having at least one aperture and a second aperture set having at least one aperture; and
a second plate (24), said second plate being movable in a first direction being perpendicular to a second direction and said second direction with respect to said stationary plate, including an aperture set having at least one aperture, wherein said first aperture set of the first plate and the aperture set of the second plate co-operate to form said first throughput area of said second valve means; and
a third plate (25), said third plate being movable in said first direction and said second direction with respect to said stationary plate, including at least one aperture set having at least one aperture, wherein said second aperture set of the first plate and the aperture set of the second plate co-operate to form said second throughput area of said second valve means.

13. The flow control valve arrangement according to any one of preceding claims 3-9, wherein said first valve means comprises
a first valve cylinder (41) including at least one aperture (42); and
at least one second cylinder (43), said second cylinder being movable in a first direction being perpendicular to a second direction and said second direction with respect to said first cylinder, including at least one aperture (44), wherein said apertures co-operate to form said throughput area of said valve means.

14. The flow control valve arrangement according to any one of preceding claims 3-9 or 13, wherein said second valve comprises

a first valve cylinder, said first cylinder including at least a first aperture set having at least one aperture and a second aperture set having at least one aperture; and

at least one second cylinder, said second cylinder being movable in a first direction being perpendicular to a second direction and said second direction with respect to said first cylinder including at least a first aperture set having at least one aperture, wherein said first aperture sets of the first cylinder and the second cylinder co-operate to form said first throughput area of said second valve means, and at least a second aperture set having at least one aperture, wherein said second aperture sets of the first cylinder and the second cylinder co-operate to form said second throughput area of said second valve means.

15. The flow control valve arrangement according to any one of preceding claims 3-14, wherein said first valve means is interconnected to said second valve means such that a change in differential pressure over said second valve means results in an equal linear adjustment in said first direction of said movable plates or cylinders of said first valve means and said second valve means.

16. A heat exchanger arrangement for heating tap water by means of a primary fluid of a primary fluid circuit of the heat exchanger (12), **characterised by**

said heat exchanger arrangement being adapted to transfer heat from said primary fluid circuit to at least one secondary fluid circuit, wherein said heat exchanger arrangement comprises a valve arrangement according to any one of claims 3-15 adapted to control a flow of an incoming primary fluid on basis of a flow of an incoming secondary fluid in said secondary fluid circuit, wherein the geometries of throughput areas of said valve arrangement for said primary and secondary fluid, respectively, are adapted to the thermal characteristics of said heat exchanger.

**Patentansprüche**

1. Verfahren zum Entwerfen von Betriebscharakteristiken einer Strömungsventilanordnung, um sie an Betriebscharakteristiken eines Prozesses anzupassen, mit welchem die Ventilanordnung interagiert, die folgenden Schritte umfassend:

Entwerfen eines ersten Lochmusters in mindestens einem ersten Element (6) und eines zweiten Lochmusters in mindestens einem zweiten Element (7) der Ventilanordnung, wobei Geometrien der Lochmuster derart gestaltet werden, dass eine gewünschte Ventilbetriebscharakteristik erreicht wird; und

Anordnen des ersten und des zweiten Elements derart, dass die Lochmuster einander überlappen können, so dass mindestens ein Durchsatzbereich der Ventilanordnung gebildet wird, wobei das erste und das zweite Element derart angeordnet sind, dass der Durchsatzbereich durch relative Verschiebungen der Elemente in mindestens zwei im Wesentlichen orthogonalen Richtungen in Abhängigkeit von mindestens zwei Parametern des Prozesses gesteuert werden kann, wobei die Parameter die Beziehung zwischen dem Durchfluss und einem Ventilzustand beeinflussen;

**dadurch gekennzeichnet, dass** es ferner die folgenden Schritte umfasst:

Einrichten der Ventilanordnung für das Steuern eines ankommenden primären Fluidstroms, der in einen Wärmetauscher (12) einströmt, derart, dass der ankommende primäre Fluidstrom in Abhängigkeit von einem sekundären Fluidstrom in einem sekundären Fluidkreis des Wärmetauschers gesteuert wird, wobei die Geometrien von Durchsatzbereichen der Ventilanordnung für das primäre bzw. sekundäre Fluid an die thermischen Eigenschaften des Wärmetauschers angepasst werden,

Einrichten der Ventilanordnung für das Steuern des Stroms des ankommenden primären Fluids in dem primären Kreis unter Verwendung eines ersten Ventilmittels (30);

Einrichten der Ventilanordnung für das Steuern des Stroms des sekundären Fluids in dem sekundären Fluidkreis unter Verwendung eines zweiten Ventilmittels (20);

Einrichten der Ventilanordnung für das Kompensieren von Einflüssen einer ersten Temperatur, um mindestens einen Durchsatzbereich des zweiten Ventilmittels auf der Basis einer Temperatur des ankommenden primären Fluids zu verstellen; und

Einrichten der Ventilanordnung für das Kompensieren von Einflüssen einer zweiten Temperatur, um mindestens einen Durchsatzbereich des zweiten Ventilmittels auf der Basis einer Temperatur des ankommenden sekundären Fluids zu verstellen.

2. Verfahren nach Anspruch 1, wobei der Schritt des Entwerfens den folgenden Schritt umfasst:

Auswählen von Geometrieparametern, derart, dass die relativen Verschiebungen der Elemente in den mindestens zwei im Wesentlichen orthogonalen Richtungen in Abhängigkeit von mindestens zwei Parametern des Prozesses Änderungen des mindestens einen Durchsatzbereichs zur Folge haben, welche die gewünschten Ventilbetriebscharakteristiken widerspiegeln.

3. Strömungsventilanordnung zum Steuern eines Fluids, wobei Betriebscharakteristiken eines Strömungsventils an Betriebscharakteristiken eines Prozesses angepasst sind, mit dem das Ventil interagiert, wobei die Ventilanordnung umfasst:

mindestens ein erstes Element (6), das ein erstes Lochmuster aufweist;
mindestens ein zweites Element (7), das ein zweites Lochmuster aufweist, wobei Geometrien der Lochmuster derart gestaltet werden, dass eine gewünschte Ventilbetriebscharakteristik erreicht wird; wobei das erste und das zweite Element derart angeordnet sind, dass die Lochmuster einander überlappen können, wodurch sie einen Durchsatzbereich der Ventilanordnung bilden; und
wobei das erste und das zweite Element derart angeordnet sind, dass der Durchsatzbereich durch relative Verschiebungen der Elemente in zwei im Wesentlichen orthogonalen Richtungen in Abhängigkeit von mindestens zwei Parametern des Prozesses gesteuert werden kann, wobei die Parameter die Beziehung zwischen dem Durchfluss und einem Ventilzustand beeinflussen;
**dadurch gekennzeichnet, dass** die Ventilanordnung dazu eingerichtet ist, einen ankommenden primären Fluidstrom zu steuern, der in einen Wärmetauscher (12) einströmt, derart, dass der ankommende primäre Fluidstrom in Abhängigkeit von einem sekundären Fluidstrom in einem sekundären Fluidkreis des Wärmetauschers gesteuert wird, wobei die Geometrien von Durchsatzbereichen der Ventilanordnung für das primäre bzw. sekundäre Fluid an die thermischen Eigenschaften des Wärmetauschers angepasst sind,

wobei die Ventilanordnung ferner umfasst:

ein erstes Ventilmittel (30), das dazu eingerichtet ist, den Strom des ankommenden primären Fluids in dem primären Kreis zu steuern;
ein zweites Ventilmittel (20), das dazu eingerichtet ist, den Strom des sekundären Fluids in dem sekundären Fluidkreis zu steuern;
ein erstes Temperaturkompensationsmittel (26), das mit dem zweiten Ventilmittel verbunden ist und dazu eingerichtet ist, mindestens einen Durchsatzbereich des zweiten Ventilmittels auf der Basis einer Temperatur des ankommenden primären Fluids zu beeinflussen; und
ein zweites Temperaturkompensationsmittel (27), das mit dem zweiten Ventilmittel verbunden ist und dazu eingerichtet ist, mindestens einen Durchsatzbereich des zweiten Ventilmittels auf der Basis einer Temperatur des ankommenden sekundären Fluids zu verstellen.

4. Strömungsventilanordnung nach Anspruch 3, wobei die Geometrieparameter derart ausgewählt sind, dass die relativen Verschiebungen der Elemente in den mindestens zwei im Wesentlichen orthogonalen Richtungen in Abhängigkeit von mindestens zwei Parametern des Prozesses Änderungen des mindestens einen Durchsatzbereichs zur Folge haben, welche die gewünschten Ventilbetriebscharakteristiken widerspiegeln.

5. Strömungsventilanordnung nach Anspruch 3 oder 4, wobei das erste Ventilmittel mit dem zweiten Ventilmittel verbunden ist, derart, dass der Strom des ankommenden primären Fluids auf der Basis eines Stroms eines ankommenden sekundären Fluids in dem sekundären Fluidkreis gesteuert werden kann.

6. Strömungsventilanordnung nach einem der Ansprüche 3-5, welche ferner umfasst:

ein erstes Druckkompensationsmittel (32), das mit dem ersten Ventilmittel verbunden ist und dazu eingerichtet ist, mindestens einen Durchsatzbereich des ersten Ventilmittels auf der Basis eines Differenzdrucks des primären Kreises zu verstellen; und
ein zweites Druckkompensationsmittel (22), das mit dem zweiten Ventilmittel verbunden ist und dazu eingerichtet ist, mindestens einen Durchsatzbereich des zweiten Ventilmittels auf der Basis eines Differenzdrucks des sekundären Kreises zu verstellen.

7.  Strömungsventilanordnung nach Anspruch 6, wobei der Differenzdruck des primären Kreises der Differenzdruck über dem ersten Ventilmittel ist und der Differenzdruck des sekundären Kreises der Differenzdruck über dem sekundären Ventilmittel ist.

8.  Strömungsventilanordnung nach Anspruch 6 oder 7, wobei das erste Druckkompensationsmittel eine erste Membran ist, die dazu eingerichtet ist, in Reaktion auf eine Änderung des Differenzdrucks über dem ersten Ventilmittel über ein Federelement (33) auf das erste Ventilmittel einzuwirken, so dass der Durchsatzbereich verstellt wird.

9.  Strömungsventilanordnung nach Anspruch 6, 7 oder 8, wobei das zweite Druckkompensationsmittel eine zweite Membran ist, die dazu eingerichtet ist, in Reaktion auf eine Änderung des Differenzdrucks über dem zweiten Ventilmittel über ein Federelement (23) auf das zweite Ventilmittel einzuwirken, so dass die Durchsatzbereiche verstellt werden.

10. Strömungsventilanordnung nach einem der vorhergehenden Ansprüche 3-9, wobei das erste Ventilmittel umfasst:

eine erste Ventilplatte (31), die mindestens eine Öffnung aufweist; und
mindestens eine zweite Platte (34), wobei die zweite Platte in einer ersten Richtung, die senkrecht zu einer zweiten Richtung ist, und der zweiten Richtung in Bezug auf die erste Platte beweglich ist und mindestens eine Öffnung aufweist, wobei die Öffnungen zusammenwirken, um den Durchsatzbereich des ersten Ventilmittels zu bilden.

11. Strömungsventilanordnung nach einem der vorhergehenden Ansprüche 3-10, wobei das zweite Ventil umfasst:

eine erste Ventilplatte (21), wobei die erste Platte mindestens einen ersten Öffnungssatz mit mindestens einer Öffnung und einen zweiten Öffnungssatz mit mindestens einer Öffnung aufweist; und
mindestens eine zweite Platte (24), wobei die zweite Platte in einer ersten Richtung, die senkrecht zu einer zweiten Richtung ist, und der zweiten Richtung in Bezug auf die stationäre Platte beweglich ist und mindestens einen ersten Öffnungssatz mit mindestens einer Öffnung, wobei die ersten Öffnungssätze der ersten Platte und der zweiten Platte zusammenwirken, um den ersten Durchsatzbereich des zweiten Ventilmittels zu bilden, und mindestens einen zweiten Öffnungssatz mit mindestens einer Öffnung, wobei die zweiten Öffnungssätze der ersten Platte und der zweiten Platte zusammenwirken, um den zweiten Durchsatzbereich des zweiten Ventilmittels zu bilden, aufweist.

12. Strömungsventilanordnung nach einem der vorhergehenden Ansprüche 3-9, wobei das zweite Ventil umfasst:

eine erste Ventilplatte (21), wobei die erste Platte mindestens einen ersten Öffnungssatz mit mindestens einer Öffnung und einen zweiten Öffnungssatz mit mindestens einer Öffnung aufweist; und
eine zweite Platte (24), wobei die zweite Platte in einer ersten Richtung, die senkrecht zu einer zweiten Richtung ist, und der zweiten Richtung in Bezug auf die stationäre Platte beweglich ist und einen Öffnungssatz mit mindestens einer Öffnung aufweist, wobei der erste Öffnungssatz der ersten Platte und der Öffnungssatz der zweiten Platte zusammenwirken, um den ersten Durchsatzbereich des zweiten Ventilmittels zu bilden; und
eine dritte Platte (25), wobei die dritte Platte in der ersten Richtung und der zweiten Richtung in Bezug auf die stationäre Platte beweglich ist und mindestens einen Öffnungssatz mit mindestens einer Öffnung aufweist, wobei der zweite Öffnungssatz der ersten Platte und der Öffnungssatz der zweiten Platte zusammenwirken, um den zweiten Durchsatzbereich des zweiten Ventilmittels zu bilden.

13. Strömungsventilanordnung nach einem der vorhergehenden Ansprüche 3-9, wobei das erste Ventilmittel umfasst:

einen ersten Ventilzylinder (41), der mindestens eine Öffnung (42) aufweist; und
mindestens einen zweiten Zylinder (43), wobei der zweite Zylinder in einer ersten Richtung, die senkrecht zu einer zweiten Richtung ist, und der zweiten Richtung in Bezug auf den ersten Zylinder beweglich ist und mindestens eine Öffnung (44) aufweist, wobei die Öffnungen zusammenwirken, um den Durchsatzbereich des Ventilmittels zu bilden.

14. Strömungsventilanordnung nach einem der vorhergehenden Ansprüche 3-9 oder 13, wobei das zweite Ventil umfasst:

einen ersten Ventilzylinder, wobei der erste Zylinder mindestens einen ersten Öffnungssatz mit mindestens einer Öffnung und einen zweiten Öffnungssatz mit mindestens einer Öffnung aufweist; und mindestens einen zweiten Zylinder, wobei der zweite Zylinder in einer ersten Richtung, die senkrecht zu einer zweiten Richtung ist, und der zweiten Richtung in Bezug auf den ersten Zylinder beweglich ist und mindestens einen ersten Öffnungssatz mit mindestens einer Öffnung, wobei die ersten Öffnungssätze des ersten Zylinders und des zweiten Zylinders zusammenwirken, um den ersten Durchsatzbereich des zweiten Ventilmittels zu bilden, und mindestens einen zweiten Öffnungssatz mit mindestens einer Öffnung, wobei die zweiten Öffnungssätze des ersten Zylinders und des zweiten Zylinders zusammenwirken, um den zweiten Durchsatzbereich des zweiten Ventilmittels zu bilden, aufweist.

15. Strömungsventilanordnung nach einem der vorhergehenden Ansprüche 3-14, wobei das erste Ventilmittel mit dem zweiten Ventilmittel verbunden ist, derart, dass eine Änderung des Differenzdrucks über dem zweiten Ventilmittel eine gleich große lineare Verstellung der beweglichen Platten oder Zylinder des ersten Ventilmittels und des zweiten Ventilmittels in der ersten Richtung zur Folge hat.

16. Wärmetauscheranordnung zum Erwärmen von Leitungswasser mittels eines primären Fluids eines primären Fluidkreises des Wärmetauschers (12), **dadurch gekennzeichnet, dass**
die Wärmetauscheranordnung dafür eingerichtet ist, Wärme von dem primären Fluidkreis zu mindestens einem sekundären Fluidkreis zu übertragen, wobei die Wärmetauscheranordnung eine Ventilanordnung nach einem der Ansprüche 3-15 umfasst, die dazu eingerichtet ist, einen Strom eines ankommenden primären Fluids auf der Basis eines Stroms eines ankommenden sekundären Fluids in dem sekundären Fluidkreis zu steuern, wobei die Geometrien von Durchsatzbereichen der Ventilanordnung für das primäre bzw. sekundäre Fluid an die thermischen Eigenschaften des Wärmetauschers angepasst sind.

## Revendications

1. Procédé de conception des caractéristiques de fonctionnement d'un dispositif de vanne de commande de flux pour l'adapter aux caractéristiques opérationnelles d'un processus avec lequel le dispositif de vanne est en interaction, comprenant les étapes consistant à:

concevoir un premier motif de trou dans au moins un premier élément (6) et un second motif de trou dans au moins un second élément (7) dudit dispositif de vanne, dans lequel les géométries desdits motifs de trou sont conçues de sorte qu'une caractéristique de fonctionnement de vanne désirée soit obtenue; et
disposer ledit premier et ledit second élément de sorte que les motifs de trou puissent se chevaucher de manière à former au moins une zone de débit dudit dispositif de vanne, dans lequel lesdits premier et second élément sont agencés de sorte que ladite zone de débit puisse être commandée par les déplacements relatifs desdits éléments dans au moins deux directions substantiellement orthogonales en fonction d'au moins deux paramètres dudit processus, lesdits paramètres influençant la relation entre le flux et un état de vanne;

**caractérisé en ce qu'**il comprend en outre les étapes consistant à:

adapter ledit dispositif de vanne pour commander un flux de fluide primaire entrant s'écoulant dans un échangeur thermique (12), de sorte que ledit flux de fluide primaire entrant soit commandée comme une fonction d'un flux de fluide secondaire dans un circuit de fluide secondaire dudit échangeur thermique, dans lequel les géométries des zones de débit dudit dispositif de vanne pour ledit fluide primaire et secondaire, respectivement, sont adaptées aux caractéristiques thermiques dudit échangeur thermique;
adapter ledit dispositif de vanne pour commander ledit flux du fluide primaire entrant dans ledit circuit primaire en utilisant un premier moyen de vanne (30);
adapter ledit dispositif de vanne pour commander ledit flux du fluide secondaire dans ledit circuit de fluide secondaire en utilisant un second moyen de vanne (20);
adapter ledit dispositif de vanne pour compenser une première température de manière à ajuster au moins une zone de débit dudit second moyen de vanne sur la base d'une température dudit fluide primaire entrant; et
adapter ledit dispositif de vanne pour compenser une seconde température de manière à ajuster au moins une zone de débit dudit second moyen de vanne sur la base d'une température dudit fluide secondaire entrant.

2. Procédé selon la revendication 1, dans lequel l'étape de conception comprend l'étape consistant à:

sélectionner des paramètres de sorte que les déplacements relatifs desdits éléments dans au moins deux directions substantiellement orthogonales en fonction d'au moins deux paramètres dudit processus provoque des variations d'au moins une zone de débit qui reflète les caractéristiques de fonctionnement de vanne désirées.

3. Dispositif de vanne de commande de flux pour commander un fluide, dans lequel les caractéristiques de fonctionnement d'une vanne de commande de flux sont adaptées aux caractéristiques de fonctionnement d'un processus avec lequel la vanne est en interaction, ledit dispositif de canne comprenant:

au moins un premier élément (6) incluant un premier motif de trou ;
au moins un second élément (7) incluant un second motif de trou, dans lequel les géométries desdits motifs de trou sont conçues de sorte qu'une caractéristique de fonctionnement de vanne désirée soit obtenue ; dans lequel ledit premier et ledit second élément sont agencés de telle sorte que les motifs de trou puissent se chevaucher en formant ainsi une zone de débit dudit dispositif de vanne ; et
dans lequel ledit premier et ledit second élément sont agencés de sorte que ladite zone de débit puisse être commandée par les déplacements relatifs desdits éléments dans deux directions substantiellement orthogonales en fonction d'au moins deux paramètres dudit processus, lesdits paramètres influençant la relation entre le flux et un état de vanne ;
**caractérisé en ce que** ledit dispositif de vanne est adapté pour commander un flux de fluide primaire entrant dans un échangeur thermique (12), de sorte que ledit fluide primaire entrant soit commandé comme une fonction d'un flux de fluide secondaire dans un circuit de fluide secondaire dudit échangeur thermique, dans lequel les géométries des zones de débit dudit dispositif de vanne pour ledit fluide primaire et secondaire, respectivement, sont adaptées aux caractéristiques thermiques dudit échangeur thermique ;
ledit dispositif de vanne comprenant en outre :

un premier moyen de vanne (30) adapté pour commander ledit flux du fluide primaire entrant dans ledit circuit primaire ;
un second moyen de vanne (20) adapté pour commander ledit flux du fluide secondaire dans ledit circuit de fluide secondaire ;
un premier moyen de compensation de température (26) connecté audit second moyen de vanne adapté pour influencer au moins une zone de débit dudit second moyen de vanne sur la base d'une température dudit fluide primaire entrant ; et
un second moyen de compensation de température (27) connecté audit second moyen de vanne adapté pour ajuster au moins une zone de débit dudit second moyen de vanne sur la base d'une température dudit fluide secondaire entrant.

4. Dispositif de vanne de commande de flux selon la revendication 3, dans lequel les paramètres de géométrie sont sélectionnés de sorte que les déplacements relatifs desdits éléments dans au moins deux directions substantiellement orthogonales en fonction d'au moins deux paramètres dudit processus provoquent des variations d'au moins une zone de débit qui reflète les caractéristiques de fonctionnement de vanne désirées.

5. Dispositif de vanne de commande de flux selon les revendications 3 ou 4, dans lequel ledit premier moyen de vanne est interconnecté audit second moyen de vanne de sorte que e flux du fluide primaire entrant puisse être commandé sur la base d'un flux d'un fluide secondaire entrant dans ledit circuit de fluide secondaire.

6. Dispositif de vanne de commande de flux selon une quelconque des revendications 3-5, comprenant en outre :

un premier moyen de compensation de pression (32) connecté audit premier moyen de vanne adapté pour ajuster au moins une zone de débit dudit premier moyen de vanne sur la base d'une pression différentielle dudit circuit primaire ; et
un second moyen de compensation de pression (22) connecté audit second moyen de vanne adapté pour ajuster au moins une zone de débit dudit second moyen de vanne sur la base d'une pression différentielle dudit circuit secondaire.

7. Dispositif de vanne de commande de flux selon la revendication 6, dans lequel la pression différentielle dudit circuit primaire est la pression différentielle sur ledit premier moyen de vanne et la pression différentielle dudit circuit secondaire est la pression différentielle sur ledit second moyen de vanne.

8. Dispositif de vanne de commande de flux selon les revendications 6 ou 7, dans lequel ledit premier moyen de compensation de pression est une première membrane adaptée pour agir sur ledit premier moyen de vanne via un élément de ressort (33) comme une réponse à une variation de pression différentielle sur ledit premier moyen de vanne de sorte que la zone de débit soit ajustée.

9.  Dispositif de vanne de commande de flux selon les revendications 6,7 ou 8, dans lequel ledit second moyen de compensation de pression est une seconde membrane adaptée pour agir sur ledit second moyen de vanne via un élément de ressort (23) comme une réponse à une variation de pression différentielle sur ledit second moyen de vanne de sorte que les zones de débit soient ajustées.

10. Dispositif de vanne de commande de flux selon une quelconque des revendications précédentes 3-9, dans lequel ledit premier moyen de vanne comprend :

   un première plaque de vanne (31) incluant au moins une ouverture ; et
   au moins une seconde plaque (34), ladite seconde plaque étant déplaçable dans une première direction étant perpendiculaire à une seconde direction et ladite seconde direction par rapport à ladite première plaque, incluant au moins une ouverture, dans lequel lesdites ouvertures coopèrent pour former ladite zone de débit dudit premier moyen de vanne.

11. Dispositif de canne de commande de flux selon une quelconque des revendications précédentes 3-10, dans lequel ladite seconde vanne comprend :

   une première plaque de vanne (21), ladite première plaque incluant au moins un premier ensemble d'ouvertures ayant au moins une ouverture et un second ensemble d'ouvertures ayant au moins une ouverture ; et
   au moins une seconde plaque (24), ladite seconde plaque étant déplaçable dans une première direction étant perpendiculaire à une seconde direction et ladite seconde direction par rapport à ladite plaque stationnaire, incluant au moins un premier ensemble d'ouvertures ayant au moins une ouverture, dans lequel ledit premier ensemble d'ouvertures de la première plaque et la seconde plaque coopèrent afin de former ladite première zone de débit dudit second moyen de vanne, et au moins un second ensemble d'ouvertures ayant au moins une ouverture, dans lequel ledit second ensemble d'ouvertures de la première plaque et la seconde plaque coopèrent afin de former ladite seconde zone de débit dudit second moyen de vanne.

12. Dispositif de vanne de commande de flux selon une quelconque des revendications précédentes 3-9, dans lequel ladite seconde vanne comprend :

   une première plaque de vanne (21), ladite première plaque incluant au moins un premier ensemble d'ouvertures ayant au moins une ouverture et un second ensemble d'ouvertures ayant au moins une ouverture ; et
   une seconde plaque (24), ladite seconde plaque étant déplaçable dans une première direction étant perpendiculaire à une seconde direction et ladite seconde direction par rapport à ladite plaque stationnaire, incluant un ensemble d'ouvertures ayant au moins une ouverture, dans lequel ledit premier ensemble d'ouvertures de la première plaque et l'ensemble d'ouvertures de la seconde plaque coopèrent pour former ladite première zone de débit dudit second moyen de vanne ; et
   une troisième plaque (25), ladite troisième plaque étant déplaçable dans ladite première direction et ladite seconde direction par rapport à ladite plaque stationnaire, incluant au moins un ensemble d'ouvertures ayant au moins une ouverture, dans lequel ledit second ensemble d'ouvertures de la première plaque et l'ensemble d'ouvertures de la seconde plaque coopèrent pour former ladite seconde zone de débit dudit second moyen de vanne.

13. Dispositif de vanne de commande de flux selon une quelconque des revendications précédentes 3-9, dans lequel ledit premier moyen de vanne comprend :

   un premier cylindre de vanne (41) incluant au moins une ouverture (42) ; et
   au moins un second cylindre (43), ledit second cylindre étant déplaçable dans une première direction étant perpendiculaire à une seconde direction et ladite seconde direction par rapport audit premier cylindre, incluant au moins une ouverture (44), dans lequel lesdites ouvertures coopèrent pour former ladite zone de débit dudit moyen de vanne.

14. Dispositif de vanne de commande de flux selon une quelconque des revendications précédentes 3-9 ou 13, dans lequel ladite seconde vanne comprend :

un premier cylindre de vanne, ledit premier cylindre incluant au moins un premier ensemble d'ouvertures ayant au moins une ouverture et un second ensemble d'ouvertures ayant au moins une ouverture ; et

au moins un second cylindre, ledit second cylindre étant déplaçable dans une première direction étant perpendiculaire à une seconde direction et ladite seconde direction par rapport audit premier cylindre, incluant au moins un premier ensemble d'ouvertures ayant au moins une ouverture, dans lequel lesdits premiers ensembles d'ouverture du premier cylindre et du second cylindre coopèrent pour former ladite première zone de débit dudit second moyen de vanne, et au moins un second ensemble d'ouvertures ayant au moins une ouverture, dans lequel lesdits seconds ensembles d'ouverture du premier cylindre et du second cylindre coopèrent pour former ladite seconde zone de débit dudit second moyen de vanne.

15. Dispositif de vanne de commande de flux selon une quelconque des revendications précédentes 3-14, dans lequel ledit premier moyen de vanne est interconnecté audit second moyen de vanne de sorte qu'une variation de pression différentielle sur ledit second moyen de vanne provoque un ajustement linéaire égal dans ladite première direction desdits plaques ou cylindres mobiles dudit premier moyen de vanne et dudit second moyen de vanne.

16. Dispositif d'échangeur thermique pour chauffer l'eau du robinet au moyen d'un fluide primaire d'un circuit de fluide primaire de l'échangeur thermique (12), **caractérisé par**

**le fait que** ledit dispositif d'échangeur thermique est adapté pour transférer de la chaleur dudit circuit de fluide primaire à au moins un circuit de fluide secondaire, dans lequel ledit dispositif d'échangeur thermique comprend un dispositif de vanne selon une quelconque des revendications 3-15 adapté pour commander un flux d'un fluide primaire entrant sur la base d'un flux d'un fluide secondaire entrant dans ledit circuit de fluide secondaire, dans lequel les géométries des zones de débit dudit dispositif de vanne pour ledit fluide primaire et secondaire, respectivement, sont adaptées aux caractéristiques thermiques dudit échangeur thermique.

Fig. 1

Fig. 2

Av (mm2)

X (mm)

**Fig. 3a**

**Fig. 3b**

Fig. 4b

Fig. 4a

**Fig. 5a**

**Fig. 5b**

Fig. 6

**Fig. 7**

**Fig. 8**

**Fig. 9**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- SE 516804
- EP 1284394 A
- WO 0177555 A
- DE 10012069